# EUROPÄISCHE PATENTSCHRIFT

(11) **EP 2 618 921 B1**
(45) Veröffentlichungstag und Bekanntmachung des Hinweises auf die Patenterteilung: **18.06.2014**
(21) Anmeldenummer: 12748673.6
(22) Anmeldetag: 10.08.2012
(51) Int. Cl.: B01F 13/00, B01F 7/00, B01F 7/18, B05C 17/005, A61C 5/06, A61C 9/00

(54) **MISCHER**
MIXER
MÉLANGEUR

(30) Priorität: 24.08.2011 DE 102011111046; 26.10.2011 WO PCT/EP2011/068784; 06.07.2012 DE 102012106093
(43) Veröffentlichungstag der Anmeldung: 31.07.2013
(73) Patentinhaber: Kettenbach GmbH & CO. KG, 35713 Eschenburg (DE)
(72) Erfinder: BUBLEWITZ, Alexander, 35745 Herborn (DE); REBER, Jens-Peter, 58540 Meinerzhagen (DE)
(74) Vertreter: Keil & Schaafhausen Patent- und Rechtsanwälte
(86) Internationale Anmeldenummer: PCT/EP2012/065743
(87) Internationale Veröffentlichungsnummer: WO 2013/026722

(56) Entgegenhaltungen:
- EP-A2- 1 149 627
- EP-B1- 1 943 012
- DE-A1- 10 112 904
- DE-C1- 10 164 385
- DE-U1- 20 302 987

## Beschreibung

Die Erfindung betrifft einen Mischer zum Mischen von zwei Komponenten, beispielsweise von Komponenten eines aushärtbaren Dentalmaterials. Der Mischer wird im Wesentlichen durch ein Mischergehäuse, ein Mischelement und einen Deckel gebildet. In dem Mischergehäuse ist ein Mischraum mit einer Auslassöffnung ausgebildet. Das Mischelement erstreckt sich in den Mischraum hinein und kann rotatorisch angetrieben sein, um die Komponenten in dem Mischraum zu vermischen. Der Deckel ist mit dem Mischergehäuse verbunden und weist zwei Einlassstutzen für die beiden Komponenten auf. In dem Mischer ist eine ringförmige Kammer ausgebildet, die mit dem Mischraum strömungsverbunden ist.

Aus der EP 1 943 012 B1 ist ein Mischer der eingangs genannten Art bekannt, bei welchem in dem Mischergehäuse eine Vorkammer, eine Mischkammer und eine Nachmischkammer ausgebildet sind. Die beiden zu mischenden Komponenten gelangen zunächst gemeinsam in die Vorkammer wo sie um die Drehachse des als Mischrotor ausgebildeten Mischelements mittels eines Verteilkörpers verteilt werden. Der Verteilkörper weist einen Längsquerschnitt auf, der in Richtung der Rotornabe gekrümmt ist. Die Komponenten können nach einer Vormischung in der Vorkammer um den Verteilerkörper herumfließen und gelangen in die stromabwärts gelegene Mischkammer, welche durch eine Platte auf dem Mischrotor begrenzt wird. Diese Platte weist beispielsweise Schlitze auf, durch welche das Gemisch in die stromabwärts der Mischkammer gelegene Nachmischkammer gelangen kann.

Beim Vermischen zweier Komponenten beispielsweise für ein Dentalmaterial besteht ein bekanntes Problem darin, dass häufig eine der beiden Komponenten, meist die Basis-Komponente, gegenüber der anderen Komponente (Katalysator-Komponente) zum Vorlaufen neigt, so dass zu Beginn des Mischvorgangs ein deutlicher Überschuss an Basis-Komponente in der Vorkammer vorliegt. In der Praxis wird daher häufig eine Anfangsmenge des aus dem Mischer austretenden Gemisches verworfen und erst das nachfolgende aus dem Mischer austretende Gemisch beispielsweise für eine Abformung oder dergleichen verwendet.

In der DE 101 12 904 A1 und der DE 10 2004 008 748 A1 werden daher Mischer vorgeschlagen, bei welchen in dem Strömungsweg der zum Vorlaufen neigenden Komponente zwischen dem Einlassstutzen und dem Mischraum eine Verzögerungs- oder Staukammer vorgesehen ist, die zumindest einen Teil der zum Vorlaufen neigenden Komponente aufnimmt. Erst nach Auffüllen dieser Verzögerungs- oder Staukammer gelangt die zum Vorlaufen neigende Komponente in den Mischraum, wodurch zu Beginn des Mischvorgangs ein besseres Mischungsverhältnis entsteht. Bei den aus der DE 101 12 904 A1 oder der DE 10 2004 008 748 A1 bekannten Mischern erstreckt sich die Verzögerungsoder Staukammer in einer zu dem Mischraum versetzten Ebene bogenförmig um knapp 180°, während die andere Komponente (Katalysator-Komponente) an der Verzögerungs- oder Staukammer vorbei direkt in den Mischraum geleitet wird. In der Praxis hat sich gezeigt, dass diese bekannten Verzögerungs- oder Staukammern sich erst dann vollständig mit der zum Vorlaufen neigenden Komponente füllen, wenn der eigentliche Mischraum vollständig befüllt ist und dadurch für die zum Vorlaufen neigende Komponente ein Gegendruck entsteht. Die Verbesserung des Mischungsverhältnisses tritt dadurch nicht immer zuverlässig ein.

Weiter sind aus der EP 1 149 627 A2 und der EP 2 190 563 B1 Mischer bekannt, bei welchen beide Komponenten ohne Vorschaltung einer Verzögerungsoder Staukammer direkt in den Mischraum gelangen. An dem drehbaren Mischelement sind dabei schalenartige Elemente ausgebildet, die ein rasches Durchströmen der Komponenten durch den Mischraum verhindern sollen. Das Problem eines unzureichenden Mischungsverhältnisses bei zum Vorlaufen neigenden Komponenten wird durch diese Mischer nicht gelöst.

Aus der EP 1 458 467 B1 ist ein Mischer bekannt, bei dem eine axiale Verzögerungskammer für eine der beiden Komponenten vorgesehen ist. Die Komponente wird hierbei durch ein Knie geführt, d.h. in axialer Richtung in einem U-förmigen Stück umgelenkt. Dies führt zwar zu der gewünschten Verzögerung dieser Komponente, erhöht jedoch auch den Strömungswiderstand des Mischers.

Weiter ist aus der EP 1 892 033 B1 ein Mischer bekannt, der gleichzeitig ein dynamischer Mischer und ein statischer Mischer ist.

Aufgabe der vorliegenden Erfindung ist es demgegenüber, einen Mischer der eingangs genannten Art bereitzustellen, bei welchem bei möglichst geringen Fließwiderständen für die zu mischenden Komponenten ein von Anfang an gleichmäßiges Mischungsverhältnis in dem aus dem Mischer austretenden Gemisch hergestellt werden kann.

Diese Aufgabe wird erfindungsgemäß mit einem Mischer nach Anspruch 1 gelöst. Hierbei ist die Kammer vorzugsweise als eine Ringreservoirkammer ausgebildet, die durch den Deckel sowie eine auf dem Mischelement vorgesehene Platte begrenzt wird. Ein erster der beiden Einlassstutzen mündet dabei in diese Ringreservoirkammer, während der zweite der beiden Einlassstutzen stromabwärts der Platte in den Mischraum mündet. Der Erfindung liegt dabei der Gedanke zugrunde, dass bei einem im Betrieb rotierenden Mischelement, d.h. bei einem dynamischen Mischer, die Ringreservoirkammer auch dann durch die zum Vorlaufen neigende Komponente aufgefüllt wird, wenn noch kein ausreichender Gegendruck in dem noch leeren Mischraum vorhanden ist. Die zum Vorlaufen neigende Komponente wird dabei aktiv durch das sich drehende Mischelement in der Ringreservoirkammer verteilt, so dass diese sich auffüllt. Durch die räumlich versetzte Zufuhr der beiden Komponenten auf den beiden gegenüberliegenden Seiten der Platte des Mischelements ist sichergestellt, dass nur die zum Vorlaufen neigende Komponente in der Ringreservoirkammer zurückgehalten wird, während im Mischraum von Beginn des Mischvorgangs an ein gleichmäßiges Mischungsverhältnis der Komponenten eintritt.

Um auch bei höheren Austraggeschwindigkeiten und/oder zäheren Komponenten einen möglichst geringen Fließwiderstand innerhalb des Mischers zu erreichen, überdecken sich die Ringreservoirkammer und der in diese mündende erste Einlassstutzen in axialer Richtung des Mischers zumindest bereichsweise. Mit anderen Worten kann die durch den ersten Einlassstutzen in den Mischer gelangende Komponente zumindest teilweise ohne eine Umlenkung unmittelbar in die Ringreservoirkammer gelangen. Es wird bevorzugt, wenn der zweite Einlassstutzen beziehungsweise ein an diesen anschließender Kanal derart ausgestaltet ist, dass dieser in radialer Richtung in den Mischraum mündet. Dies verbessert die Durchmischung der beiden Komponenten in dem stromaufwärts gelegenen Bereich des Mischraumes. Mit anderen Worten sind die von den Einlassstutzen in den Mischraum führende Strömungswege bzw. Kanäle vorzugsweise derart ausgestaltet sind, dass eine der Komponenten im Wesentlichen in radialer Richtung und eine andere Komponente im Wesentlichen in axialer Richtung in den Mischraum gelangen, wodurch schon bei diesem Aufeinandertreffen der Komponenten aus unterschiedlichen Strömungsrichtungen bereits eine gute Durchmischung stattfindet.

Die an dem Mischelement vorgesehene Platte soll einerseits verhindern, dass die zum Vorlaufen neigende Komponente unmittelbar in den Mischraum gelangt. Andererseits soll diese Komponente nach dem aktiven Auffüllen des Ringraums durch die Rotationsbewegung in den Mischraum weiterfließen können, ohne den Strömungswiderstand innerhalb des Mischers zu stark zu vergrößern. Hierzu wird es bevorzugt, wenn in der Platte wenigstens eine die Ringreservoirkammer mit dem Mischraum verbindende Öffnung ausgebildet ist. Vorzugsweise sind mehrere Aussparungen insbesondere am radial äußeren Bereich der Platte vorgesehen.

Um die Verteilung der zum Vorlaufen neigenden Komponente innerhalb der Ringreservoirkammer weiter zu verbessern, sind vorzugsweise an dem Mischelement beziehungsweise an der Platte Mitnehmer ausgebildet. Diese Mitnehmer können als quer zu der Platte des Mischelements verlaufende Stege oder Wände ausgebildet sein. Vorzugsweise sind beidseits der wenigstens einen die Ringreservoirkammer und den Mischraum verbindenden Öffnung derartige Mitnehmer vorgesehen. Dies hat den weiteren Vorteil, dass beim Abschalten des Mischers ein Nachfließen beziehungsweise Rückfließen einer Komponente in den Einlassstutzen der anderen Komponente aufgrund von Druckschwankungen weitestgehend vermieden werden kann. Das Risiko einer sogenannten Rück-Kontamination wird hierdurch minimiert.

Das aktive Auffüllen der Ringreservoirkammer durch die Rotationsbewegung sowie eine Minimierung des Fließwiderstands innerhalb des Mischers kann dadurch erreicht werden, dass die Ringreservoirkammer als ein von dem abschnittsweise zylindrischen Mischelement durchsetzter zylindrischer Hohlraum ausgebildet ist. So kann die Ringreservoirkammer in einem Längsschnitt des Mischers annähernd rechteckig und von dem vorzugsweise zylindrisch gestalteten Abschnitt des Mischelements durchsetzt ausgebildet sein.

Das Mischergehäuse weist nach einer bevorzugten Ausführungsform der Erfindung einen sich zu der Auslassöffnung hin beilspielsweise konisch verjüngenden ersten zylindrischen Abschnitt auf, der den Mischraum umschließt. Um für die Ringreservoirkammer ein ausreichend großes Volumen bereitstellen zu können, ist vorzugsweise ein zweiter zylindrischer Abschnitt an dem Mischergehäuse vorgesehen, welcher den Deckel aufnimmt. Der erste zylindrische Abschnitt ist dabei bevorzugt mit dem zweiten zylindrischen Abschnitt über eine sich radial erstreckende Wand verbunden.

Insbesondere bei der zuvor genannten Ausführungsform mit einer sich radial erstreckenden Wand zwischen zwei zylindrischen Abschnitten des Mischergehäuses kann die Abdichtung zwischen dem Deckel und dem Mischergehäuse in einander in axialer Richtung gegenüberliegenden. Flächen erfolgen. Vorzugsweise ist hierzu eine Labyrinthdichtung vorgesehen, beispielsweise in Form einer umlaufenden ringförmigen Nut in dem Deckel, in welche ein ringförmig umlaufender Steg des Mischergehäuses eingreift. Hierbei wird es bevorzugt, wenn der Deckel zunächst nur, bspw. über eine Rastverbindung, frei drehbar in dem Mischergehäuse gehalten ist, wobei die Dichtung noch nicht vollständig abdichten muss. Durch die Schraub-Befestigung des Mischers an einer Kartusche wird der Deckel erst bei Benutzung des Mischers fest gegen das Mischergehäuse gepresst, wodurch die Dichtung abdichtet. Die endgültige Abdichtung der beiden Teile erfolgt somit erst durch Einschrauben des Mischers mit Außengewinde in das korrespondierende Innengewinde der Kartusche.

Eine besonders gute Abdichtung kann dabei dadurch erfolgen, dass der Deckel und das Mischergehäuse aus unterschiedlich harten Materialien bestehen. Bspw. kann der Deckel aus einem weicheren Material, z.B. Polypropylen (PP) oder Polyethylen (PE), und das Mischergehäuse aus einem härteren Material, z.B. Polyoxymethylen (POM), insbesondere hoch transparentes Polyethylenterephthalat (PET), Polymethylmethacrylat (PMMA) oder Polycarbonat (PC), bestehen. Das Mischelement besteht vorzugsweise aus POM oder einem Kunststoff mit ähnlichen Materialeigenschaften, der ebenfalls eine gute Abdichtung zu dem weicheren Deckel ermöglicht.

Der Deckel des Mischers ist bevorzugt frei drehbar und axial fixiert in dem Mischergehäuse aufgenommen. Das Mischelement ist ebenfalls frei drehbar und möglichst axial fixiert in dem Mischergehäuse und dem Deckel gelagert. Diese Ausgestaltung des Mischers mit einem relativ zu dem Mischergehäuse frei drehbaren Deckel ermöglicht eine Vielzahl unterschiedlicher Befestigungsarten des Mischers, beispielsweise an einem Kartuschensystem.

So wird es als besonders vorteilhaft erachtet, wenn das Mischergehäuse auf seiner Außenseite abschnittsweise mit einem Gewinde versehen ist. Dieses, vorzugsweise selbsthemmende, Gewinde ermöglicht es, das Mischergehäuse in ein entsprechendes Innengewinde eines Kartuschensystems einzuschrauben, wobei die Einlassstutzen des Deckels mit entsprechenden Auslassstutzen des Kartuschensystems in Überdeckung beziehungsweise in Eingriff gebracht sein können. Der Mischer lässt sich auf diese Weise leicht auf ein Kartuschensystem aufschrauben beziehungsweise durch Abschrauben wieder von diesem trennen.

Die Kartusche und der Mischer können mit Rastelementen ausgestattet sein, die ineinander eingreifen, wenn die Gewinde des Mischers und der Kartusche ineinander eingeschraubt sind. Dies kann einerseits ein unbeabsichtigtes Ablösen des Mischers von der Kartusche verhindern und andererseits einem Benutzer eine taktile und/oder akustische Rückmeldung geben, dass der Mischer ordnungsgemäß befestigt ist.

Um die Ausrichtung des Deckels bei der Verbindung des Mischers mit einem Kartuschensystem zu verbessern, ist der Deckel vorzugsweise einstückig mit wenigstens einer sich parallel zu den Einlassstutzen erstreckende Positionierungszunge ausgebildet. Diese Positionierungszunge kann, vorzugsweise noch bevor die Einlassstutzen mit Auslassstutzen des Kartuschensystems in Kontakt treten, in eine entsprechende Öffnung des Kartuschensystems eingreifen, um so die richtige Ausrichtung des Mischers zu dem Kartuschensystem im speziellen eintritt mischer mit austritt kart sicherzustellen.

Vorzugsweise sind stirnseitig an einer radialen Wand des Mischergehäuses Schraubflügel vorgesehen, um das Befestigen bzw. Lösen des Mischers von einer Kartusche zu erleichtern. Um einen Verzug zu vermeiden, sind die Schraubflügel im Gehäuse vorzugsweise nur an der radialen Wand befestigt, d.h. mit einem Abstand von der zylindrischen Wand der Mischkammer.

Das Befestigen bzw. Lösen des Mischers von einer Kartusche kann zusätzlich oder alternativ hierzu durch eine Riffelung und/oder Rändelung erleichtert werden. Die Riffelung und/oder Rändelung ist aus haptischen Gründen vorzugsweise durch Nuten (statt durch vorstehende Rippen) ausgebildet.

Weiter kann das Mischelement mit einer Einfädelgeometrie versehen sein, die das Einstecken einer Antriebswelle in das Mischelement erleichtert. Dies kann bspw. eine konische Fase oder andere Abschrägung sein, die es erleichtert, dass sich die Innensechskantkontur des Mischelements und die mit einem Außensechskant versehene Antriebswelle beim Ineinanderstecken finden und selbsttätig ausrichten.

Es wird bevorzugt, wenn der zweite der beiden Einlassstutzen über einen Kanal in den Mischraum mündet, der seitlich bzw. parallel an der Ringreservoirkammer vorbeiführt oder durch diese hindurchführt.

Die Erfindung wird nachfolgend anhand eines Ausführungsbeispiels und unter Bezugnahme auf die Zeichnung näher erläutert. Dabei bilden alle beschrieben und/oder bildlich dargestellten Merkmale für sich den Gegenstand der Erfindung, unabhängig von Ihrer Zusammenfassung in den Ansprüchen oder deren Rückbezügen.

Es zeigen schematisch:
- Figur 1: in Perspektivansicht einen erfindungsgemäßen Mischer,
- Figur 2: in einer ersten Explosionsansicht die Komponenten des Mischers nach Figur 1,
- Figur 3: in einer weiteren Explosionsansicht die Komponenten des Mischers nach Figur 1,
- Figur 4: in Perspektivansicht den Deckel und das Mischelement des Mischers nach Figur 1,
- Figur 5: in teilweise aufgebrochener Perspektivansicht den Mischer nach Figur 1,
- Figur 6: in Schnittansicht den Mischer nach Figur 1,
- Figur 7: eine Kartusche zur Verwendung mit einem erfindungsgemäßen Mischer,
- Figur 8: in Schnittansicht die Strömungswege der Komponenten in einem erfindungsgemäßen Mischer,
- Figur 9: in Perspektivansicht das Mischelement eines erfindungsgemäßen Mischers,
- Figur 10: in Perspektivansicht eine weitere Ausführungsform eines Mischers,
- Figur 11: in Schnittansicht den Mischer nach Figur 13 in einem Kartuschensystem,
- Figur 12: in teilweise aufgebrochener Perspektivansicht eine weitere Ausführungsform eines Mischers, und
- Figur 13: in Perspektivansicht das Mischelement des Mischers nach Figur 12.

Der in den Figuren dargestellte erfindungsgemäße Mischer 1 ist ein dynamischer Mischer, der aus einem Mischergehäuse 2, einem Deckel 3 und einem Mischelement 4 besteht.

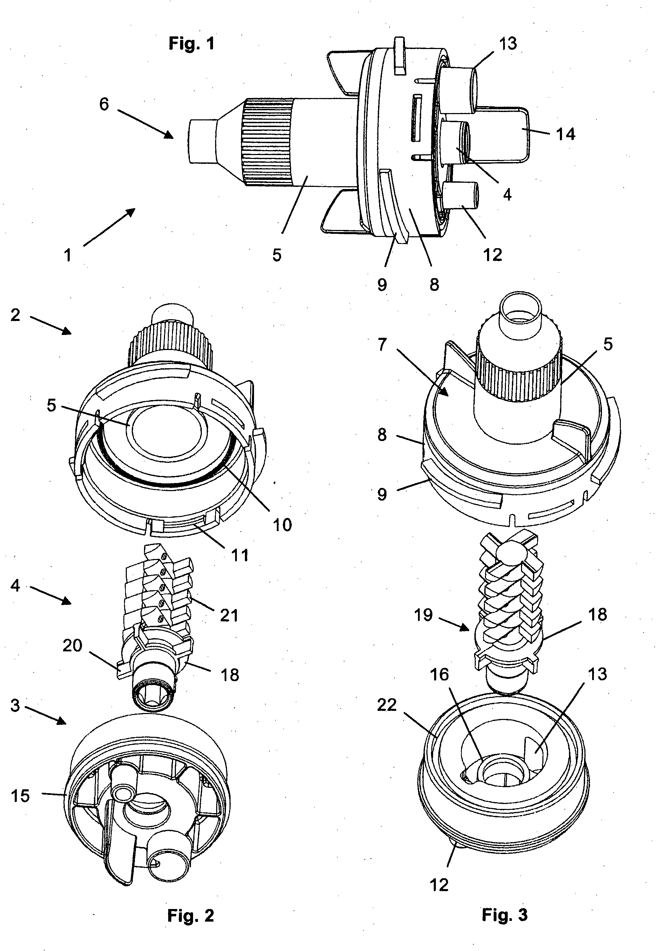

Das Mischergehäuse 2 weist einen ersten zylindrischen Abschnitt 5 auf, der sich an dem in Figur 1 linken Ende zu einer Auslassöffnung 6 verjüngt. Von dem ersten zylindrischen Abschnitt 5 zweigt eine radial verlaufende, flanschartige Wand 7 ab, die den ersten zylindrischen Abschnitt 5 mit einem zweiten zylindrischen Abschnitt 8 verbindet. Der zweite zylindrische Abschnitt 8 weist dabei einen größeren Durchmesser als der erste zylindrische Abschnitt 5 auf.

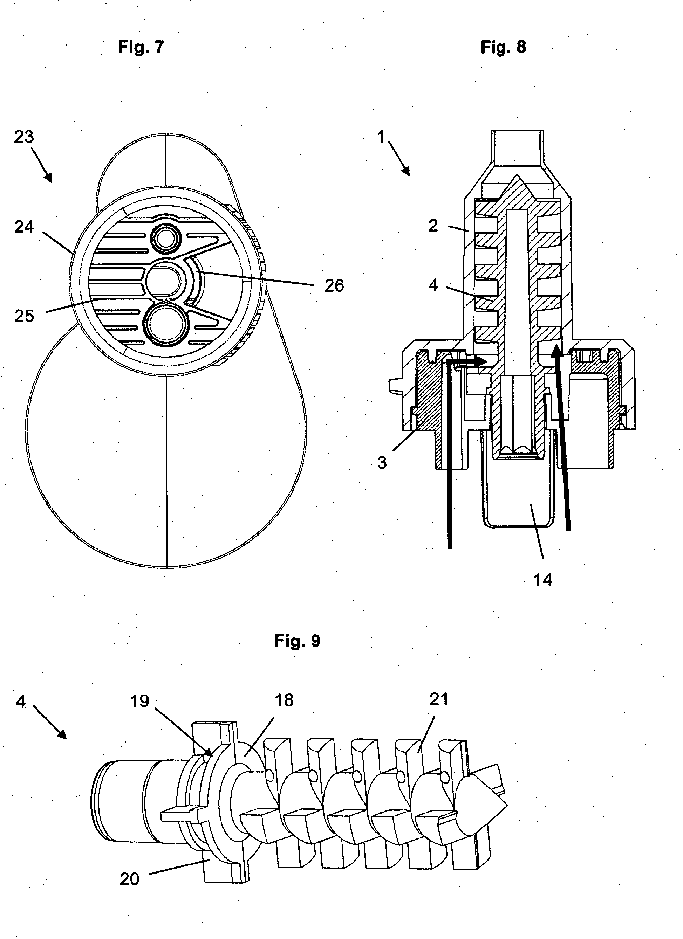

Auf der Außenfläche des zweiten zylindrischen Abschnitts 8 sind Gewindesegmente 9 vorgesehen, welche ein Außengewinde zum Aufschrauben des Mischers 1 auf ein in Figur 7 dargestelltes Kartuschensystem 23 bilden. Auf der der Auslassöffnung 6 abgewandten Seite der radialen Wand 7 ist ein ringförmig umlaufender Steg 10 ausgebildet, der in nachfolgend näher beschriebener Weise einen Bestandteil einer Abdichtung gegenüber dem Deckel 3 bildet. Weiter sind auf der Innenseite des zweiten zylindrischen Abschnitts 8 Rastelemente 11 zur Verbindung des Mischergehäuses 2 mit Deckel 3 ausgebildet.

Der Deckel 3 weist auf seiner in Figur 1 rechten Seiten zwei Einlassstutzen 12, 13 für die zu mischenden Komponenten auf. Die Einlassstutzen 12, 13 sind in der dargestellten Ausführungsform mit einem unterschiedlichen Durchmesser ausgestaltet, so dass Komponenten in unterschiedlichem Volumenverhältnis miteinander gemischt werden. Abweichend von der Darstellung in den Figuren ist es auch möglich andere Volumenverhältnisse oder identische Volumenverhältnisse durch entsprechende Anpassung der Geometrie der Einlassstutzen in einem Mischer zu verarbeiten.

Parallel zu den Einlassstutzen 12, 13 ragt eine Positionierungszunge 14 von der in Figur 1 rechten Seite des Deckels 3 weg, deren Länge größer als die der Einlassstutzen 12, 13 ist. Die Positionierungszunge 14 ist dabei im Querschnitt bogenförmig gekrümmt ausgebildet, so dass die Einlassstutzen 12, 13 automatisch Auslassstutzen einer Kartusche 23 treffen, wenn die Positionierungszunge 14 in eine entsprechend gestaltete Öffnung 26 der Kartusche eingesteckt wird. In Figur 7 ist zudem ein im Auslassbereich der Kartusche 23 vorgesehener Ring 24 dargestellt, der ein Innengewinde zur Verbindung mit dem Gewindesegment 9 aufweist. Auf einer von diesem Ring 24 umgebenen Platte, in die die Auslassstutzen der Kartusche 23 münden, sind gegenüber der Platte in Richtung des Mischers vorstehende Rippen 25 ausgebildet, die verhindern, dass der Mischer falsch aufgesetzt wird. Darüber hinaus kann eine solche Querverrippung zwischen und/oder unterhalb der Auslassstutzen der Kartusche eine unerwünschte Verschleppung bspw. der Katalysator-Paste oder der Base-Paste eines Zweikomponentengemisches zum jeweils anderen Kanal vermeiden.

Das Befestigen eines erfindungsgemäßen Mischers 1 auf einer Kartusche 23 mit folgenden Schritten: Zuerst kommt die Positionierungszunge 14 ab einem bestimmten Punkt in Berührungskontakt mit der entsprechenden Aufnahme an der Kartusche, wobei anfänglich Spiel zwischen der Positionierungszunge 14 und der Aufnahme 26 in der Kartusche besteht. Danach fungiert die Positionierungszunge wie eine Führungsschiene in einem, z.B. konisch auslaufenden, Kanal in der Kartusche. In der Folge wird hierdurch der Mischer 1 durch das axiale Einschieben der Positionierungszunge 14 automatisch in der Kartusche 23 zentriert und ausgerichtet.

Auf der äußeren Umfangsfläche des Deckels 3 ist eine Rastlippe 15 ausgebildet, welche mit den Rastelementen 11 des Mischergehäuses 2 zur Befestigung des Deckels 3 in dem Mischergehäuse 2 zusammenwirkt. Der Deckel 3 kann auf diese Weise frei drehbar aber axial fest innerhalb des Mischergehäuses 2 fixiert werden.

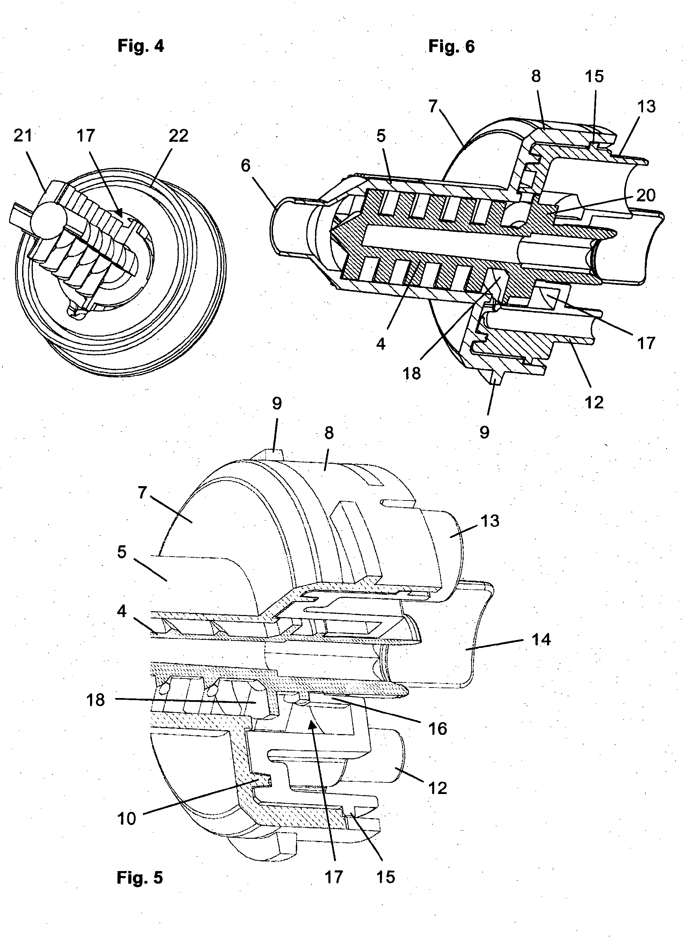

In dem Deckel 3 ist eine zentrale Durchgangsöffnung ausgebildet, die von einem Kragen 16 umschlossen wird, welcher ein Gleitlager für das Mischelement 4 bildet. Wie insbesondere aus den Figuren 2 und 4 ersichtlich ist, ist in dem Deckel 3 weiter ein im Wesentlichen zylindrischer Freiraum vorgesehen, der bereichsweise den Kragen 16 umgibt. Dieser Freiraum bildet in dem Mischer 1 u.a. eine Ringreservoirkammer 17. Der Durchmesser des Freiraums sowie die Position des Einlassstutzens 13 sind so gewählt, dass sich der Freiraum und die Öffnung des Einlassstutzens 13 in axialer Richtung teilweise überdecken. Eine durch den Einlassstutzen 13 einströmende Komponente kann somit zumindest teilweise ohne Umlenkung in die Ringreservoirkammer 17 gelangen. Diese Komponente gelangt dann in axialer Richtung in die Mischkammer. Wie insbesondere aus Figur 6 ersichtlich ist, mündet der kanalartig verlängerte Einlassstutzen 12 dagegen mit einer radialen Öffnung direkt in einen zum Mischraum zählenden Bereich des zylindrischen Freiraums des Deckels 3.

Das Mischelement 4 ist als ein antreibbarer Mischerstab ausgebildet, der an seinem in Figur 1 rechten Ende als eine Hohlwelle mit einer Innensechskantkontur ausgebildet ist, in welche eine sechseckige Antriebswelle eingreifen kann. Der in dem Kragen 16 des Deckels 3 drehbar geführte Abschnitt des Mischelements 4 ist bereichsweise zylindrisch ausgebildet.

Weiter ist an dem Mischelement 4 eine sich radial von diesem weg erstreckende, kreisförmige Platte 18 vorgesehen. Wie beispielsweise aus den Figuren 2 und 9 ersichtlich ist, sind in dem radial äußeren Bereich der Platte 18 vier ringsegmentartige Aussparungen 19 ausgebildet, welche sich jeweils um etwas weniger als 90° erstrecken. In dem Bereich der zwischen den Aussparungen 19 verbleibenden Stege der Platte 18 sind Mitnehmer 20 ausgebildet, welche durch senkrecht zu der Platte 18 verlaufende Wände gebildet sind.

Im zusammengebauten Zustand des Mischers 1 definiert die Platte 18 eine Begrenzungswand für die Mischkammer 17, welche in dem Deckel 3 ausgebildet ist. Die Position der Platte 18 auf dem Mischelement 4 ist dabei so gewählt, dass ausschließlich die über den Einlassstutzen 13 in den Mischer gelangende Komponente in die Ringreservoirkammer 17 geleitet wird, dort aktiv verteilt wird und von dort aus in den Mischraum fließt. Die durch den Einlassstutzen 12 in den Mischer gelangende Komponente wird dagegen auf der gegenüberliegenden Seite der Platte 18 radial in den Mischraum des Mischers 1 eingebracht, welcher im Wesentlichen durch den ersten zylindrischen Abschnitt 5 des Mischergehäuses 2 umschlossen wird. Die Platte 18 trennt somit die Ringreservoirkammer 17 von dem Mischraum und ermöglicht aufgrund der Aussparungen 19 eine Strömungsverbindung zwischen der Ringreservoirkammer 17 und dem Mischraum. Wie in Figur 8 gezeigt, erfolgt das Einströmen der Komponenten orthogonal zueinander, wodurch eine gute Mischung erreicht wird, ohne dass sich der Fließwiderstand merklich erhöht.

Weiter sind an dem Mischelement 4 in mehreren Ebenen Arme 21 angeordnet, die zu einem Durchmischen der beiden Komponenten in dem Mischraum dienen.

Im zusammengebauten Zustand des Mischers 1 ist das Mischelement 4 frei drehbar in dem Deckel 3 geführt, wobei der mit den Armen 21 versehene Abschnitt des Mischelements 4 in dem ersten zylindrischen Abschnitt 5 des Mischergehäuses 2 aufgenommen ist. Der Deckel 3 ist frei drehbar mit dem Mischergehäuse 2 verbunden, indem die Rastlippe 15 von den Rastelementen 11 des Mischergehäuses 2 hintergriffen wird. Eine Abdichtung zwischen dem Mischergehäuse 2 und dem Deckel 3 erfolgt über den ringförmigen Steg 10 des Mischergehäuses 2, welcher in eine entsprechende Nut 22 in dem Deckel 3 eingreift in der Art einer Labyrinthdichtung, die dann greift, wenn ein Mischer kraftschlüssig in die Kartusche eingeschraubt wird.

In diesem zusammengebauten Zustand des Mischers befindet sich die Platte 18 des Mischelements 4 in einer Position, dass die beiden durch die Einlassstutzen 12 und 13 eintretenden Komponenten auf gegenüberliegenden Seiten der Platte 18 an das Mischelement 4 gelangen, d. h. in zueinander in axialer Richtung des Mischers versetzten Ebenen. Die durch den im dargestellten Beispiel größeren Einlassstutzen 13 eintretende Komponente gelangt dabei zunächst in die Ringreservoirkammer 17, wobei diese Komponente durch die Rotation der Mitnehmer 20 zusammen mit dem Mischelement 4 so in der Ringreservoirkammer 17 verteilt wird, dass diese sich auffüllt. Die Drehung des Mischelements 4 bewirkt somit ein aktives Füllen der Ringreservoirkammer 17 insbesondere auch unabhängig von einem etwaigen Gegendruck innerhalb des Mischers 1.

Wenn die Ringreservoirkammer 17 zumindest weitgehend aufgefüllt ist, gelangt die durch den Einlassstutzen 13 einströmende Komponente durch die Aussparungen 19 auch in den Mischraum. Diese Komponente tritt somit in axialer Richtung in den Mischraum ein. Dagegen tritt die durch den Einlassstutzen 12 zugeführte Komponente in radialer Richtung in den Mischraum ein, wodurch sich bereits anfänglich eine gute Vermischung der beiden Komponenten ergibt. Diese Vermischung wird durch die sich mit dem Mischelement 4 drehende Arme 21 weiter intensiviert, so dass aus der Auslassöffnung 6 ein homogenes Gemisch der beiden Komponenten austritt.

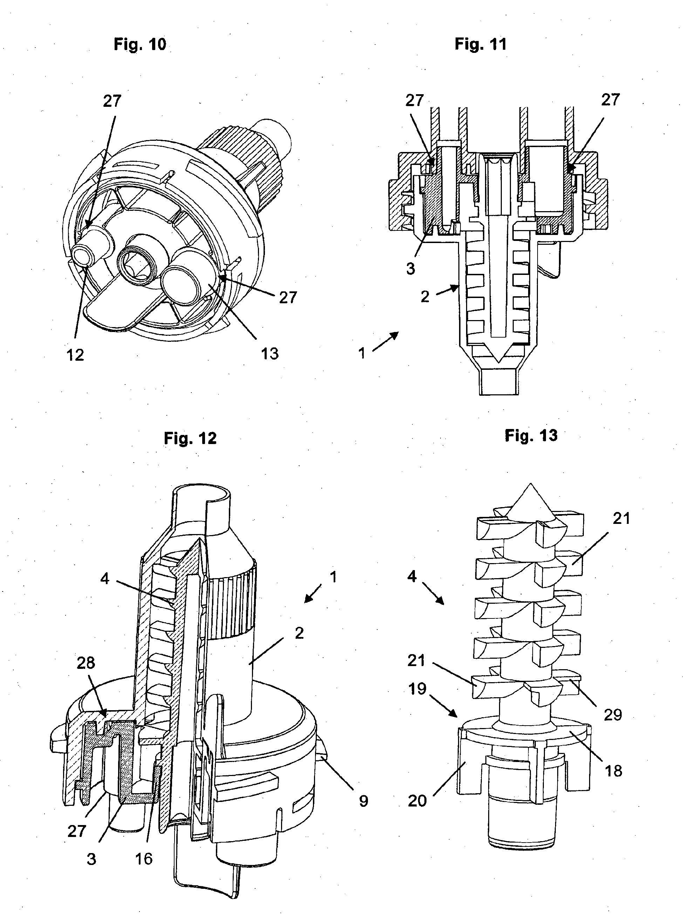

Der in den Figuren 10 und 11 dargestellte Mischer weist am Deckel 3 ringförmige stirnseitige Dichtflächen 27 auf, die um die Einlasskanäle 12, 13 herum vorgesehen sind und auf denen der jeweilige Auslassstutzen der Kartusche zu liegen kommen. Diese Dichtflächen bewirken eine zu der radialen Dichtfläche am Außenumfang der Stutzen zusätzliche stirnseitige Dichtwirkung.

Eine weitere Ausführungsform eines erfindungsgemäßen Mischers ist in den Figuren 12 und 13 dargestellt. Im Unterschied zu dem Mischer nach den Figuren 10 und 11 weist am Deckel 3 auf der radial inneren Seite des Stegs 10 eine ringförmige Dichtlippe 28 auf, die bei hohem Druck eine verbesserte Abdichtung bewirkt. Zudem ist das Mischelement 4 gegenüber der Ausführungsform von Figur 9 abgewandelt ausgebildet. Insbesondere sind die Mitnehmer 20 an der Platte 18 in Richtung zu der Kartusche verlängert ausgebildet, so dass die Ringreservoirkammer 17 in Figur 12 nach unten im Wesentlichen vollständig verschlossen wird. Somit kann eine Kreuzkontamination, d.h. das ungewollte Fließen einer Komponente in den Einlassbereich der anderen Komponente, noch wirkungsvoller vermieden werden.

Bei dem Mischelement 4 nach Figur 13 sind auch die Arme 21 der der Platte 18 zugewandten ersten Armebene (in Figur 13 unten) anders als die Arme 21 der übrigen Ebenen ausgestaltet. So ist an den Armen 21 an deren vertikaler Stirnseite (in Drehrichtung vorne) jeweils eine horizontale Wand 29 vorgesehen, die den Durchtritt der Komponenten in den Mischraum erschwert bzw. verlangsamt. Hierdurch findet eine intensivere Mischung der beiden Komponenten in dem Bereich statt, in welchem der Kanal des Einlassstutzens 12 in den Mischraum mündet.

Abweichend von der Darstellung in den Figuren 9 und 13 kann es für eine bessere Mischhomogenität vorteilhaft sein, am oberen (auslassseitigen) Ende des

Mischerelemts 4 in Richtung des Mischerauslasses, wo sich in den Figuren 9 und 13 ein spitzer Kegel befindet, ein weiteres Mischblatt oder Mischelement einzubauen, was der Kontur der sich verjüngenden Mischerhülse folgt und in die Mündung des Mischers hineinragt.

Die Vorteile des erfindungsgemäßen Mischers ergeben sich auch aus den nachfolgenden Vergleichsbeispielen:
Die Messwerte in Tabelle 1 zeigen, dass die gemessenen Austragskräfte bei Verwendung des erfindungsgemäßen, strömungsoptimierten, dynamischen Mischers signifikant unterhalb der mit denselben Abformmaterialien gemessenen Werte mit dynamischen Mischern nach dem Stand der Technik liegen.

**Tabelle 1**

| Austragskräfte von 2-Komponenten-Abformmaterialien aus 380 ml-Kartuschen (Mischungsverhältnis von Katalysatorpaste zu Base-Paste von 1:5) mit verschiedenen dynamischen Mischern ¹⁾ | | | |
|---|---|---|---|
| Beispiele | medium body-Abformmaterial ²⁾ | heavy body-Abformmaterial ³⁾ | putty- Abformmaterial ⁴⁾ |
| Erfindungsgemäßes System | 1550 N | 1950 N | 6000 N |
| Vergleichsbeispiel 1 | 2400 N | 2600 N | 7000 N |
| Vergleichsbeispiel 2 | ⁵⁾ | ⁶⁾ | ⁷⁾ |
| Vergleichsbeispiel 3 | 1900 N | 2450 N | 6100 N ⁸⁾ |

| | | | |
|---|---|---|---|
| Vergleichsbeispiel 1: Sulzer-Mixpac-System, Mischer MBD 381-05-HS, Artikel-Nr. 116211, Lot-Nr. SO04105 (gemäß EP 1 943 012) Vergleichsbeispiel 2: DMG-System (gemäß DE 10 2004 008 748) Vergleichsbeispiel 3: Zhermack-System (gemäß EP 1 892 033) ¹⁾ hierzu wurde die genannten Abformmaterialien in das jeweilige Kartuschen/Mischer-System abgefüllt und die Austragskräfte über eine entsprechende Messeinrichtung an der Universalprüfmaschine Zwick Z 0100 bei einem Vorschub von 46 mm/min unter Rotation des dynamischen Mischers mit 700 U/min erfasst. ²⁾ Identium medium, Kettenbach GmbH & Co. KG, Typ 2 gemäß ISO 4823, Lot 110191-60 ³⁾ Identium heavy, Kettenbach GmbH & Co. KG, Typ 1 gemäß ISO 4823, Lot 120211-36 ⁴⁾ Aquasil Deca putty, Dentsply DeTrey Inc., Typ 0 gemäß ISO 4823, Lot 607510 ⁵⁾ diese Kartusche/Mischer-Kombination ist nicht für das Austragen von medium-Konsistenzen geeignet. Insbesondere die mechanische Stabilität der Kartusche ist nicht ausreichend, die auftretenden Kräfte aufzunehmen. Bei 5300 N platzte die Kartusche. ⁶⁾ diese Kartusche/Mischer-Kombination ist nicht für das Austragen von heavy-Konsistenzen geeignet. Insbesondere die mechanische Stabilität der Kartusche ist nicht ausreichend, die auftretenden Kräfte aufzunehmen. ⁷⁾ diese Kartusche/Mischer-Kombination ist nicht für das Austragen von putty-Konsistenzen geeignet. Insbesondere die mechanische Stabilität der Kartusche ist nicht ausreichend, die auftretenden Kräfte aufzunehmen. ⁸⁾ Bei den gemessenen Austragskräften zeigten sich Undichtigkeiten am Mischer und im Bereich der Verschlusskolben. | | | |

Die Messwerte in Tabelle 2 zeigen, dass bei Verwendung des erfindungsgemäßen, dynamischen Mischers die Materialauswahl in der Labyrinthdichtung zwischen Mischerhülse (PET) und Mischerdeckel (PP) und im Gleitlager an der Dichtstelle des Mischerstabs (POM) in der Laufbuchse im Mischerdeckel (PP) zu einer sehr guten Dichtigkeit gegenüber dynamischen Mischern nach dem Stand der Technik führen. Die Messwerte zeigen weiterhin, dass bei den dynamischen Mischern nach dem Stand der Technik die Dichtigkeit erst nach kostenintensiven technischen Maßnahmen akzeptabel wird, zum Beispiel durch Einbau einer O-Ring-Dichtung im Bereich Mischerstab zu Mischerdeckel (siehe Vergleich der Beispiele Zhermack 2009 zu Zhermack 2012) oder durch Einführung einer Ultraschallverschweißung zwischen Mischerdeckel und Mischerhülse (siehe Vergleich der Beispiele Sulzer-Mixpac 2008 zu Sulzer-Mixpac 2011). Die Auswahl von hochtransparentem PET in der Mischerhülse ist möglich, da beim erfindungsgemäßen Mischer keine Ultraschallverschweissung zwischen Mischerdeckel und Mischerhülse erforderlich ist. Die hohe Transparenz führt zu einer guten visuellen Kontrollmöglichkeit im Mischer während des Mischvorgangs.

**Tabelle 2**

| Dichtigkeit und Transparenz von verschiedenen dynamischen Mischern ¹⁾ beim Austragen von 2-Komponenten Dental-Abformmaterialien aus 380 ml-Kartuschen (Mischungsverhältnis Katalysator-Paste zu Base-Paste von 1:5): | | | | | |
|---|---|---|---|---|---|
| Beispiele | Materialkombination Mischerstab Deckel Hülse | Abdichtungsprinzip Hülse zu Deckel | Bewertung Transparenz ¹⁾ Hülse | Bewertung Dichtigkeit²⁾ Hülse - Deckel | Bewertung Dichtigkeit²⁾ Deckel - Mischerstab |
| Erfindungsgemäßer Mischer | POM - PP - PET | Labyrinthdichtung frei drehbar durch Verschraubung des Mischers in die Kartusche dichtend | ++ | ++ | ++ |
| Vergleichsbeispiel 1 | POM - PP - PP | verrastet, nicht drehbar | O | - | + |
| Vergleichsbeispiel 2 | POM - PP - PP | ultraschallverschweisst, nicht drehbar | O | ++ | ++ |
| Vergleichsbeispiel 3 | POM - PP - PP | zweifach verrastet nicht drehbar | O | + | -- |
| Vergleichsbeispiel 4 | POM - PP - PP | vierfach verrastet nicht drehbar, O-Ring-Dichtung am Mischerstab | O | + | ++ |

| | | | | | |
|---|---|---|---|---|---|
| Vergleichsbeispiel 1:Sulzer-Mixpac-System 2008, Artikel: MDB 381-05-00 (gemäß EP 1 943 012) Vergleichsbeispiel 2: Sulzer-Mixpac-System 2011, Artikel: MDB 381-05-HS (gemäß EP 1 943 012) Vergleichsbeispiel 3: Zhermack-System 2009 (gemäß EP 1 892 033) Vergleichsbeispiel 4: Zhermack-System 2012 (gemäß EP 1 892 033) 1) hierzu wurde das Abformmaterial Identium medium in das jeweilige Kartuschen/Mischer-System abgefüllt und eine Minute lang mit einem handelsüblichen Austragsgerät (Firma Renfert Sympress II) mit einem Vorschub von 46 mm/min und einer Mischerdrehzahl von 700 U/min ausgetragen und gemischt. Die Dichtigkeit des jeweiligen dynamischen Mischers wird visuell an der Dichtstelle Mischerstab zu Mischerdeckel und an der Dichtstelle Mischerhülse zu Mischerdeckel mit Hilfe einer Skala von ++ bis -- bewertet: - ++:: sehr gut, kein Masseaustritt - +:: geringer Masseaustritt - 0:: deutlicher, noch akzeptabler Masseaustritt - -:: starker Masseaustritt - --:: starker Masseaustritt mit Verschmutzung des Austragsgeräts/der Kartusche 2) hierzu wurde das Abformmaterial Identium medium in das jeweilige Kartuschen/Mischer-System abgefüllt und eine Minute lang mit einem handelsüblichen Austragsgerät (Firma Renfert Sympress II) gemischt und ausgetragen. Die hohe Transparenz ermöglicht eine optimale visuelle Mischkontrolle des Anwenders. Die Transparenz des jeweiligen Kunststoffs wird visuell an der Mischerhülse mit Hilfe einer Skala von ++ bis -- bewertet: - ++:: hochtransparent, Masse sehr deutlich erkennbar - +:: transparent, leichte Trübung, Masse gut zu erkennen - 0:: deutliche Trübung, Masse scheint durch - -:: starke Trübung, Masse noch erkennbar - -- :: nicht transparent, Masse nicht erkennbar | | | | | |

Die Messwerte in Tabelle 3 zeigen, dass die Ring Reservoir Kammer bei Verwendung des erfindungsgemäßen, dynamischen Mischers sich deutlich schneller vollständig füllt, als die Staukammern bei dynamischen Mischern gemäß dem Stand der Technik. Hierdurch entfällt das Risiko, das im späteren Verlauf des Mischens, wenn der Gegendruck im Mischer sich erhöht, Volumen-Dosierschwankungen durch spätes Auffüllen der Staukammer auftreten, die zu Mischinhomogenitäten im ausgetragenen Produkt führen.

**Tabelle 3**

| Vergleich der verschiedenen dynamischen Mischer im Hinblick auf den Füllgrad der Staukammern zu verschiedenen Zeitpunkten nach Mischbeginn im Vergleich zum erfindungsgemäßen Mischer mit Ringreservoirkammer¹⁾ | | | | | | |
|---|---|---|---|---|---|---|
| Beispiel | 1s | 1,5s | 2s | 2,5s | 3s | 4s |
| Erfindungsgemäßes System | 70% | 100% | 100% | 100% | 100% | 100% |
| Vergleichsbeispiel 1 | 10% | 20% | 40% | 50% | 90% | 100% |
| Vergleichsbeispiel 2 | 30% | 50% | 70% | 80% | 100% | 100% |

| | | | | | | |
|---|---|---|---|---|---|---|
| Vergleichsbeispiel 1: Sulzer-Mixpac-System (gemäß EP 1 943 012) Vergleichsbeispiel 2: DMG-System (gemäß DE 10 2004 008 748) ¹⁾ hierzu wurde ein mittelfließendes Dentalabformmaterial, Typ 2 gemäß ISO 4823 in das jeweilige Kartuschen/Mischer-System abgefüllt und über ein Sympress I - Austraggerät der Fa. Renfert ausgetragen und über den jeweiligen dynamischen Mischer gemischt. Der Füllgrad der jeweiligen Staukammer/Ringreservoirkammer wurde durch Stoppen der Mischvorgänge nach 1s, 1,5s, 2s, 2,5s, 3s und 4s visuell beurteilt. | | | | | | |

**Bezugszeichenliste:**

| | | | |
|---|---|---|---|
| 1 | Mischer | 15 | Rastlippe |
| 2 | Mischergehäuse | 16 | Kragen |
| 3 | Deckel | 17 | Ringreservoirkammer |
| 4 | Mischelement | 18 | Platte |
| 5 | erster zylindrischer Abschnitt | 19 | Aussparung |
| | des Mischergehäuses | 20 | Mitnehmer |
| 6 | Auslassöffnung | 21 | Arm |
| 7 | Wand | 22 | Nut |
| 8 | zweiter zylindrischer Abschnitt | 23 | Kartusche |
| | des Mischergehäuses | 24 | Ring |
| 9 | Gewindesegment | 25 | Rippe |
| 10 | Steg | 26 | Öffnung |
| 11 | Rastelement | 27 | stirnseitige Dichtflächen |
| 12 | Einlassstutzen | 28 | Lippe |
| 13 | Einlassstutzen | 29 | Wand |
| 14 | Positionierungszunge | | |

## Patentansprüche

1. Mischer zum Mischen von zwei Komponenten, insbesondere eines aushärtbaren Dentalmaterials, mit einem Mischergehäuse (2), in dem ein Mischraum mit einer Auslassöffnung (6) ausgebildet ist, einem Mischelement (4), das sich in den Mischraum erstreckt, einem mit dem Mischergehäuse (2) verbundenen Deckel (3), der zwei Einlassstutzen (12, 13) für die Komponenten aufweist, und mit einer ringförmigen Kammer (17), die mit dem Mischraum strömungsverbunden ist, **dadurch gekennzeichnet, dass** die Kammer eine durch den Deckel (3) sowie eine auf dem Mischelement (4) vorgesehene Platte (18) begrenzte Ringreservoirkammer (17) ist, und dass ein erster der beiden Einlassstutzen (13) in die Ringreservoirkammer (17) mündet, und der zweite der beiden Einlassstutzen (12) stromabwärts der Platte (18) in den Mischraum mündet.

2. Mischer nach Anspruch 1, **dadurch gekennzeichnet, dass** sich die Ringreservoirkammer (17) und der in diese mündende erste Einlassstutzen (13) in axialer Richtung zumindest bereichsweise überdecken, und dass der zweite Einlassstutzen (12) in radialer Richtung in den Mischraum mündet.

3. Mischer nach Anspruch 1 oder 2, **dadurch gekennzeichnet, dass** von den Einlassstutzen (12, 13) in den Mischraum führende Strömungswege derart ausgestaltet sind, dass eine der Komponenten im Wesentlichen in radialer Richtung und eine andere Komponente im Wesentlichen in axialer Richtung in den Mischraum gelangen.

4. Mischer nach einem der Ansprüche 1 bis 3, **dadurch gekennzeichnet, dass** in der Platte (18) wenigstens eine die Ringreservoirkammer (17) mit dem Mischraum verbindende Öffnung (19) ausgebildet ist.

5. Mischer nach einem der vorhergehenden Ansprüche, **dadurch gekennzeichnet, dass** an dem Mischelement (4), insbesondere an der Platte (18), Mitnehmer (20) zur aktiven Mitnahme und Verteilung einer Komponente innerhalb der Ringreservoirkammer (17) ausgebildet sind.

6. Mischer nach einem der vorhergehenden Ansprüche, **dadurch gekennzeichnet, dass** die Ringreservoirkammer (17) als ein von dem abschnittsweise zylindrischen Mischelement (4) durchsetzter zylindrischer Hohlraum ausgebildet ist.

7. Mischer nach einem der vorhergehenden Ansprüche, **dadurch gekennzeichnet, dass** das Mischergehäuse (2) einen sich zu der Auslassöffnung (6) konisch verjüngenden ersten zylindrischen Abschnitt (5) aufweist, der den Mischraum umschließt, sowie einen den Deckel (3) aufnehmenden zweiten zylindrischen Abschnitt (8), wobei der erste zylindrische Abschnitt (5) mit dem zweiten zylindrischen Abschnitt (8) über eine sich radial erstreckende Wand (7) verbunden ist.

8. Mischer nach einem der vorhergehenden Ansprüche, **dadurch gekennzeichnet, dass** zwischen dem Deckel (3) und dem Mischergehäuse (2) in einander in axialer Richtung gegenüberliegenden Flächen eine Dichtung (10, 22), insbesondere eine Labyrinthdichtung, vorgesehen ist.

9. Mischer nach einem der vorhergehenden Ansprüche, **dadurch gekennzeichnet, dass** der Deckel (3) frei drehbar und axial fixiert in dem Mischergehäuse (2) aufgenommen ist.

10. Mischer nach einem der vorhergehenden Ansprüche, **dadurch gekennzeichnet, dass** das Mischergehäuse (2) auf seiner Außenseite komplett oder abschnittsweise mit einem Gewinde (9) versehen ist.

11. Mischer nach einem der vorhergehenden Ansprüche, **dadurch gekennzeichnet, dass** der Deckel (3) einstückig mit wenigstens einer sich parallel zu den Einlassstutzen (12, 13) erstreckenden Positionierungszunge (14) ausgebildet ist.

12. Mischer nach einem der vorhergehenden Ansprüche, **dadurch gekennzeichnet, dass** der Deckel (3) aus einem ersten Material, insbesondere PP, besteht, und das Mischergehäuse (2) und/oder das Mischelement (4) aus einem zweiten Material mit von dem ersten Material verschiedener Härte, insbesondere PET bzw. POM, bestehen.

13. Mischer nach einem der vorhergehenden Ansprüche, **dadurch gekennzeichnet, dass** Schraubflügel stirnseitig an einer radialen Wand des Mischergehäuses vorgesehen sind.

14. Mischer nach einem der vorhergehenden Ansprüche, **dadurch gekennzeichnet, dass** an dem Mischergehäuse eine Riffelung und/oder Rändelung durch Nuten ausgebildet ist.

15. Mischer nach einem der vorhergehenden Ansprüche, **dadurch gekennzeichnet, dass** das Mischelement (4) mit einer Einfädelgeometrie versehen ist, die das Einstecken einer Antriebswelle in das Mischelement (4) erleichtert.

16. Mischer nach einem der vorhergehenden Ansprüche, **dadurch gekennzeichnet, dass** der zweite der beiden Einlassstutzen (12) über einen Kanal in den Mischraum mündet, der seitlich an der Ringreservoirkammer (17) vorbeiführt oder durch diese hindurchführt.

## Claims

1. A mixer for mixing two components, in particular a curable dental material, having a mixer housing (2), in which a mixing space with an outlet opening (6) is formed, a mixing element (4), which extends into the mixing space, a cover (3), which is connected to the mixer housing (2) and has two inlet connections (12, 13) for the components, and having a ring-shaped chamber (17), which is fluidically connected to the mixing space, **characterized in that** the chamber is a ring reservoir chamber (17) bordered by the cover (3) and a plate (18) provided on the mixing element (4), and a first one of the two inlet connections (13) opens into the ring reservoir chamber (17), and the second one of the two inlet connections (12) opens into the mixing space downstream from the plate (18).

2. The mixer according to Claim 1, **characterized in that** the ring reservoir chamber (17) and the first inlet connection (13) opening into it are covered in the axial direction in at least some regions, and the second inlet connection (12) opens into the mixing space in the radial direction.

3. The mixer according to Claim 1 or 2, **characterized in that** flow paths leading from the inlet connection (12, 13) into the mixing space are designed so that one of the components enters the mixing space essentially in the radial direction and another component enters the mixing space essentially in the axial direction.

4. The mixer according to any one of Claims 1 to 3, **characterized in that** at least one opening (19), which connects the ring reservoir chamber (17) to the mixing space, is designed in the plate (18).

5. The mixer according to any one of the preceding claims, **characterized in that** entraining elements (20) for actively entraining and distributing a component within the ring reservoir chamber (17) are formed on the mixing element (4), in particular on the plate (18).

6. The mixer according to any one of the preceding claims, **characterized in that** the ring reservoir chamber (17) is designed as a cylindrical hollow space through which the cylindrical mixing element (4) passes in some sections.

7. The mixer according to any one of the preceding claims, **characterized in that** the mixer housing (2) has a first cylindrical section (5), which tapers conically toward the outlet opening (6) and surrounds the mixing space, as well as having a second cylindrical section (8), which receives the cover (3), wherein the first cylindrical section (5) is connected to the second cylindrical section (8) by means of a wall (7), which extends radially.

8. The mixer according to any one of the preceding claims, **characterized in that** a seal (10, 22), in particular a labyrinth seal, is provided between the cover (3) and the mixer housing (2) in surfaces, which are opposite one another in the axial direction.

9. The mixer according to any one of the preceding claims, **characterized in that** the cover (3) is accommodated so that it can rotate freely and is secured axially in the mixer housing (2).

10. The mixer according to any one of the preceding claims, **characterized in that** the mixer housing (2) is provided with a thread (9) in some sections or over the entire exterior.

11. The mixer according to any one of the preceding claims, **characterized in that** the cover (3) is designed in one piece with at least one positioning tongue (14) that extends parallel to the inlet connection (12, 13).

12. The mixer according to any one of the preceding claims, **characterized in that** the cover (3) is made of a first material, in particular PP, and the mixer housing (2) and/or the mixing element (4) is made of a second material, in particular PET and/or POM, which has a different hardness from the first material.

13. The mixer according to any one of the preceding claims, **characterized in that** helical wings are provided on the end face on a radial wall of the mixer housing.

14. The mixer according to any one of the preceding claims, **characterized in that** fluting and/or knurling is/are formed by grooves on the mixer housing.

15. The mixer according to any one of the preceding claims, **characterized in that** the mixing element (4) is provided with a threading geometry, which facilitates the insertion of a drive shaft into the mixing element (4).

16. The mixer according to any one of the preceding claims, **characterized in that** the second of the two inlet connections (12) opens through a channel into the mixing space, which passes laterally by or through the ring reservoir chamber (17).

## Revendications

1. Mélangeur servant à mélanger deux composants, en particulier un matériau dentaire durcissable, comportant un boîtier de mélangeur (2) dans lequel est constituée une cellule de mélange dotée d'un orifice de sortie (6), un élément mélangeur (4) qui s'étend dans la cellule de mélange, un couvercle (3) raccordé au boîtier de mélangeur (2) et qui présente deux tubulures d'admission (12, 13) pour les composants et une chambre circulaire (17) qui est reliée au niveau écoulement à la cellule de mélange, **caractérisé en ce que** la chambre est une chambre de réserve circulaire (17) délimitée par le couvercle (3) et une plaque (18) prévue sur l'élément mélangeur (4) et qu'une première des deux tubulures d'admission (13) débouche dans la chambre de réserve circulaire (17) et que la seconde des deux tubulures d'admission (12) débouche en aval de la plaque (18) dans la cellule de mélange.

2. Mélangeur selon la revendication 1, **caractérisé en ce que** la chambre de réserve circulaire (17) et la première tubulure d'admission (13) débouchant dans celle-ci se recouvrent du moins par endroits dans le sens axial et que la seconde tubulure d'admission (12) débouche dans la cellule de mélange dans le sens radial.

3. Mélangeur selon la revendication 1 ou 2, **caractérisé en ce que** les parcours d'écoulement allant des tubulures d'admission (12, 13) à la cellule de mélange sont conçues de manière à ce qu'un des composants arrive sensiblement dans le sens radial et un autre composant sensiblement dans le sens axial jusqu'à la cellule de mélange.

4. Mélangeur selon une des revendications 1 à 3, **caractérisé en ce qu**'est pratiqué dans la plaque (18) au moins un orifice (19) raccordant la chambre de réserve circulaire (17) à la cellule de mélange.

5. Mélangeur selon une des revendications précédentes, **caractérisé en ce que** sont constitués au niveau de l'élément mélangeur (4), en particulier de la plaque (18), des entraîneurs (20) servant à un entraînement actif et à une répartition d'un composant dans la chambre de réserve circulaire (17).

6. Mélangeur selon une des revendications précédentes, **caractérisé en ce que** la chambre de réserve circulaire (17) se présente sous forme d'une cavité cylindrique dans laquelle passe un élément mélangeur cylindrique par sections (4).

7. Mélangeur selon une des revendications précédentes, **caractérisé en ce que** le boîtier de mélangeur (2) présente une première section cylindrique (5) se rétrécissant en cône en direction de l'orifice d'admission (6) et qui circonscrit la cellule de mélange, ainsi qu'une seconde section cylindrique (8) recevant le couvercle (3), la première section cylindrique (5) étant raccordée à la seconde section cylindrique (8) par une paroi (7) s'étendant radialement.

8. Mélangeur selon une des revendications précédentes, **caractérisé en ce que,** entre le couvercle (3) et le boîtier de mélangeur (2), il est prévu un joint (10, 22), en particulier un joint labyrinthe, dans des surfaces opposées mutuellement dans le sens axial.

9. Mélangeur selon une des revendications précédentes, **caractérisé en ce que** le couvercle (3) est reçu de manière à pouvoir tourner librement et à être fixé axialement dans le boîtier de mélangeur (2).

10. Mélangeur selon une des revendications précédentes, **caractérisé en ce que** le boîtier de mélangeur (2) est pourvu intégralement ou par sections d'un filetage (9) sur sa face extérieure.

11. Mélangeur selon une des revendications précédentes, **caractérisé en ce que** le couvercle (3) est réalisé en une seule pièce avec au moins une languette de positionnement (14) s'étendant parallèlement aux tubulures d'admission (12, 13).

12. Mélangeur selon une des revendications précédentes, **caractérisé en ce que** le couvercle (3) est composé d'un premier matériau, en particulier du PP, et que le boîtier de mélangeur (2) et/ou l'élément mélangeur (4) sont composés d'un second matériau ayant une dureté différente de celle du premier matériau, en particulier du PET ou du POM.

13. Mélangeur selon une des revendications précédentes, **caractérisé en ce que** des ailettes filetées sont prévues à l'avant sur une paroi radiale du boîtier de mélangeur.

14. Mélangeur selon une des revendications précédentes, **caractérisé en ce qu'**une cannelure et/ou une bordure est constituée par des rainures au niveau du boîtier de mélangeur.

15. Mélangeur selon une des revendications précédentes, **caractérisé en ce que** l'élément mélangeur (4) est pourvu d'une géométrie d'enfilage qui facilite l'insertion d'un arbre moteur dans l'élément mélangeur (4).

16. Mélangeur selon une des revendications précédentes, **caractérisé en ce que** la seconde des deux tubulures d'admission (12) débouche dans la cellule de mélange par un canal qui passe latéralement devant la chambre de réserve circulaire (17) ou la traverse.
